# FASCICULE DE BREVET EUROPEEN

(11) **EP 3 435 528 B1**
(45) Date de publication et mention de la délivrance du brevet: **30.12.2020**
(21) Numéro de dépôt: 18184606.4
(22) Date de dépôt: 20.07.2018
(51) Int. Cl.: H02K 35/06, H02K 35/00

(54) **CONVERTISSEUR D'ENERGIE ELECTROMAGNETIQUE**
ELEKTROMAGNETISCHER ENERGIEWANDLER
ELECTROMAGNETIC ENERGY CONVERTER

(30) Priorité: 25.07.2017 FR 1757054
(43) Date de publication de la demande: 30.01.2019
(73) Titulaire: Commissariat à l'énergie atomique et aux énergies alternatives, 75015 Paris (FR)
(72) Inventeur: DESPESSE, Ghislain, 38340 VOREPPE (FR); BOISSEAU, Sébastien, 38130 ECHIROLLES (FR)
(74) Mandataire: Brevalex

(56) Documents cités:
- WO-A1-2013/159247
- CN-A- 105 162 304
- CN-A- 106 899 190
- DE-A1- 4 405 846
- DE-A1-102011 007 397
- FR-A- 336 445
- GB-A- 110 329
- GB-A- 2 425 222

## Description

### DOMAINE TECHNIQUE

La présente invention concerne un convertisseur d'énergie électromagnétique. En particulier, la présente invention concerne un convertisseur électromagnétique destiné à être mis en œuvre dans un interrupteur autonome.

### ART ANTÉRIEUR

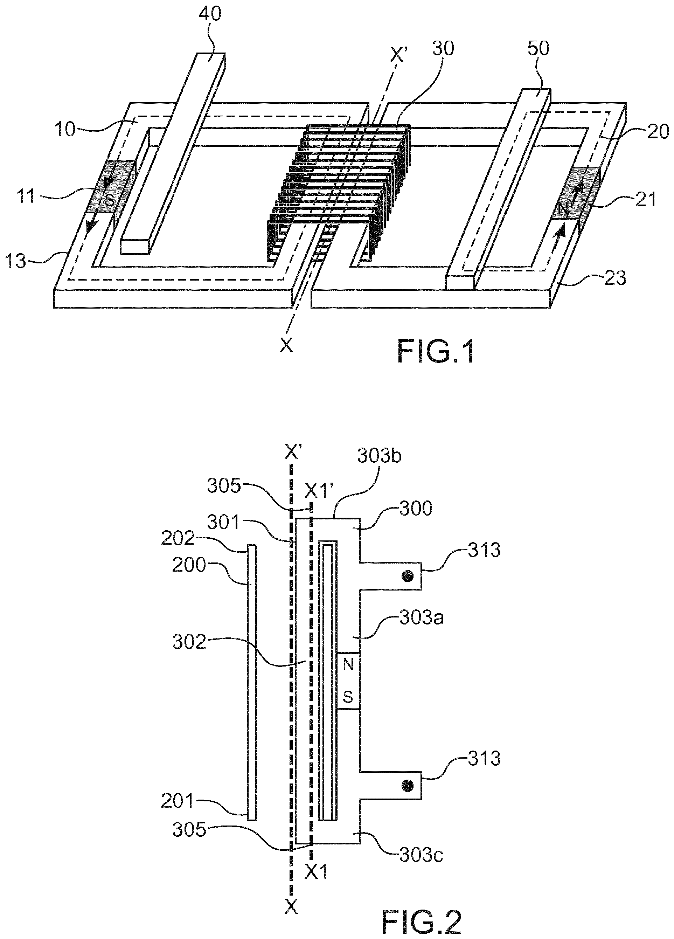

La figure 1 représente un convertisseur d'énergie électromagnétique connu de l'état de la technique et décrit dans le document WO 2011/069879 A1.

Ce convertisseur d'énergie électromagnétique comprend deux circuits magnétiques 10 et 20 distincts traversant une bobine conductrice 30 selon son axe d'élongation XX'.

En particulier, chaque circuit magnétique 10 et 20 comprend un aimant permanent 11, 21 inséré dans l'entrefer d'une culasse ferromagnétique 13, 23 destinée à guider un flux magnétique généré par l'aimant permanent 11, 21 au travers de la bobine conductrice 30. Les deux aimants permanents 11, 21 sont en outre agencés de sorte que les flux magnétiques guidés par les deux culasses au travers de la bobine sont opposés l'un de l'autre.

Le principe général de fonctionnement du convertisseur d'énergie électromagnétique est basé sur l'activation d'une variation temporelle du flux magnétique traversant la bobine conductrice de manière à faire apparaître une tension électrique aux bornes de cette dernière.

A cet égard, le convertisseur d'énergie électromagnétique est également doté d'un système d'activation mécanique dont l'action permet d'activer la variation temporelle de flux magnétique. En particulier, le système d'activation comprend deux pièces ferromagnétiques 40 et 50, mobiles, destinées à court-circuiter, et de manière différenciée, l'un ou l'autre des deux circuits magnétiques 10 et 20.

Cependant, ce convertisseur d'énergie électromagnétique décrit dans ce document n'est pas satisfaisant.

En effet, chaque pièce ferromagnétique 40 ou 50 ne court-circuite que partiellement l'un ou l'autre des circuits magnétiques 10 et 20, limitant *de facto* la variation temporelle de flux magnétique au travers de la bobine conductrice 30.

Par ailleurs, l'effet de saturation et de pertes magnétiques des circuits magnétiques rend vain l'emploi d'aimants permanents présentant une aimantation plus importante.

En outre, le système d'activation mécanique nécessite l'emploi d'un module d'échappement et/ou d'accumulation d'énergie, tels que des lames à ressort, ou encore des cliquets, permettant un mouvement rapide des pièces ferromagnétiques 40 et 50 de manière à ce qu'une tension appréciable puisse être atteinte aux bornes de la bobine conductrice.

A titre d'exemple, un déplacement d'une durée de l'ordre de la milliseconde est nécessaire pour un convertisseur, présentant un volume de l'ordre de 1 cm³, pour générer une tension électrique de l'ordre du Volt aux bornes de la bobine conductrice. Une tension de cet ordre de grandeur est notamment requise dès lors que le convertisseur d'énergie électromagnétique est mis en œuvre dans des interrupteurs autonomes.

Cependant, le module d'échappement et/ou d'accumulation d'énergie, dès lors qu'il nécessite l'adjonction d'éléments additionnels, rend la mise en œuvre du convertisseur compliquée, et affecte d'autant sa robustesse.

Les documents CN105162304, GB2425222, DE4405846, et GB110329 divulguent chacun un dispositif électromagnétique.

Un but de la présente invention est alors de proposer un convertisseur d'énergie électromagnétique compact, et susceptible de présenter une tension électrique appréciable aux bornes de la bobine conductrice pour un volume réduit.

Un autre but de la présente invention est de proposer un convertisseur d'énergie électromagnétique plus simple à mettre œuvre.

### EXPOSÉ DE L'INVENTION

Les buts énoncés ci-dessus sont, au moins en partie, atteints par un convertisseur d'énergie électromagnétique selon la revendication 1.

A noter que par aimant, il peut s'agir d'un matériau aimanté de manière permanente, par exemple du Néodyme-Fer-Bore, ou de ce même matériau accompagné de pièces ferromagnétiques pour mieux canaliser le flux magnétique lors de la mise en contact.

Selon l'invention, la portion secondaire de la culasse comprend un premier entrefer et un second entrefer au niveau desquels s'effectue le couplage magnétique, respectivement, du premier aimant et du second aimant avec ladite culasse dès lors que cette dernière se trouve, respectivement, dans sa première position P1 d'équilibre ou dans sa seconde position P2 d'équilibre.

Toujours selon l'invention, le convertisseur comprend en outre un premier élément et un second élément, fixes, faits d'un matériau ferromagnétique, et agencés pour court-circuiter, respectivement, le premier entrefer et le second entrefer dès lors que la culasse se trouve, respectivement, dans sa seconde position P2 d'équilibre ou dans sa première position P1 d'équilibre.

Selon un mode de mise en œuvre, la portion secondaire comprend un tronçon secondaire, parallèle à l'axe d'élongation XX', au niveau duquel sont disposés le premier entrefer et le second entrefer.

Selon un mode de mise en œuvre, le convertisseur comprend, en outre, un premier court-circuit et un second court-circuit, solidaires de la culasse, et destinés à court-circuiter les lignes de champ, respectivement, du premier aimant et du second aimant dès lors que la culasse se trouve dans la seconde position P2 d'équilibre ou dans la première position P1 d'équilibre.

Selon un mode de mise en œuvre, le premier court-circuit et le second court-circuit comprennent chacun une plaque ferromagnétique agencée pour connecter les deux pôles, respectivement, du premier aimant et du second aimant, dès lors que la culasse se trouve dans la seconde position P2 d'équilibre ou dans la première position P1 d'équilibre.

Selon un mode de mise en œuvre, le premier aimant et le second aimant présentent, respectivement, une première polarité magnétique et une seconde polarité magnétique, la première et la seconde polarité magnétique étant parallèles et en opposition l'une de l'autre, avantageusement, la première polarité magnétique est parallèle à l'axe d'élongation XX'.

Selon un mode de mise en œuvre, le convertisseur comprend en outre au moins une languette latérale agencée pour provoquer le passage de la culasse de sa première position P1 d'équilibre à sa seconde position d'équilibre dès lors qu'une force extérieure est appliquée sur ladite languette.

Selon un mode de mise en œuvre, la languette latérale est adaptée pour fléchir sous l'action d'une force extérieure et accumuler une énergie mécanique avant que la culasse ne passe de sa première position P1 d'équilibre à sa second position P2 d'équilibre, ladite énergie mécanique accumulée par la languette latérale est libérée lors du passage de la culasse de sa première position P1 d'équilibre à sa second P2 position d'équilibre.

Selon un mode de mise en œuvre, le convertisseur est également doté d'un moyen de rappel adapté pour contraindre la culasse à adopter la première position P1 d'équilibre dès lors qu'aucune force extérieure n'est appliquée sur ladite culasse.

Selon un mode de mise en œuvre, l'au moins un dispositif de variation de flux magnétique comprend deux dispositifs de variation de flux magnétique dits, respectivement, premier dispositif de variation de flux magnétique et second dispositif de variation de flux magnétique, les culasses de chacun des premier dispositif de variation de flux magnétique et second dispositif de variation de flux magnétique, dites respectivement, première culasse et seconde culasse sont agencées pour pivoter de manière simultanée et symétrique, l'une de l'autre, par rapport à un plan passant par l'axe d'élongation XX', autour de leurs axes de rotation respectifs, dès lors qu'une force extérieure est exercée sur l'une ou l'autre des deux culasses.

Selon un mode de mise en œuvre, les tronçons principaux des première culasse et seconde culasse dits, respectivement, premier tronçon principal et second tronçon principal, coopèrent entre eux, via des moyens de coopération, de manière à permettre audites culasses de pivoter de manière simultanée autour de leur axe de rotation respectif dès lors qu'une force extérieure est exercée sur l'une ou l'autre des deux culasses.

Selon un mode de mise en œuvre, les moyens de coopération comprennent un engrenage formé sur chacun des premier et second tronçons principaux.

Selon un mode de mise en œuvre, les moyens de coopération comprennent une rainure formée sur l'un des premier ou second tronçons principaux, et un profilé formé sur l'autre des premier ou second tronçons principaux, le profilé étant logé dans la rainure.

L'invention concerne également un interrupteur autonome comprenant le convertisseur d'énergie électromagnétique selon la présente invention.

### BRÈVE DESCRIPTION DES DESSINS

D'autres caractéristiques et avantages apparaîtront dans la description qui va suivre du convertisseur d'énergie électromagnétique selon l'invention, donnés à titre d'exemples non limitatifs, en référence aux dessins annexés dans lesquels :
- la figure 1 est une représentation schématique en perspective d'un convertisseur d'énergie électromagnétique connu de l'état de la technique ;
- la figure 2 est une représentation schématique, selon un plan de coupe passant par l'axe d'élongation XX' et parallèle à un plan formé par le support, du convertisseur d'énergie électromagnétique selon un premier exemple non couvert par la présente invention ;
- les figures 3a, 3b et 3c sont des représentations schématiques, selon un plan de coupe perpendiculaire à l'axe d'élongation XX', du convertisseur d'énergie électromagnétique selon le premier exemple, en particulier, les figures 3a, 3b, et 3c représentent, respectivement, la culasse dans sa première position d'équilibre, dans une position médiane, et dans sa seconde position d'équilibre ;
- la figure 4a est une représentation schématique du couplage magnétique de la culasse avec un aimant selon un premier exemple d'une première variante du premier exemple ;
- la figure 4b est une représentation schématique de la disposition des premier et second court-circuits selon le premier exemple de la première variante du premier exemple ;
- la figure 4c est une représentation schématique du couplage magnétique de la culasse avec un aimant selon un second exemple de la première variante du premier exemple ;
- la figure 5 est une représentation schématique de la disposition des premier et second entrefers par rapport aux deux aimants permanents selon un mode de réalisation de la présente invention,
- la figure 6 est une représentation schématique, selon un plan de coupe passant par l'axe d'élongation XX' et parallèle à un plan formé par le support, du convertisseur d'énergie électromagnétique selon un second exemple non couvert par la présente invention ;
- les figures 7a, 7b et 7c sont des représentations schématiques, selon un plan de coupe perpendiculaire à l'axe d'élongation XX', du convertisseur d'énergie électromagnétique selon le second exemple, en particulier, les figures 7a, 7b, et 7c représentant, respectivement, la première et la seconde culasses dans leur première position d'équilibre, dans une position médiane, et dans leur seconde position d'équilibre ;
- les figures 8a, 8b et 8c sont des représentations schématiques, selon un plan de coupe perpendiculaire à l'axe d'élongation XX', des moyens de coopération selon le second exemple ;
- les figures 9a, 9b et 9c sont des représentations schématiques, selon un plan de coupe perpendiculaire à l'axe d'élongation XX', d'une liaison pivot entre le premier tronçon principal et le second tronçon principal selon le second exemple ;
- les figures 10a et 10b sont des représentations schématiques, selon un plan de coupe comprenant l'axe d'élongation XX', et selon un plan de coupe perpendiculaire à l'axe d'élongation XX', respectivement ;
- les figures 11a, 11b, 11c et 11d sont des représentations schématiques de la disposition de l'aimant dans l'entrefer de la culasse selon les troisième et quatrième exemples non couvert par présente invention, en particulier, les figures 11a, 11b, 11c et 11d proposent des exemples de mécanismes d'entrainement ;
- les figures 12, 13 et 14 sont des représentations schématiques de culasses démontables susceptibles d'être mises en œuvre dans les différents modes de réalisation de la présente invention
- la figure 15 est une représentation schématique d'un support pourvu de montant destinés à maintenir au moins une culasse ferromagnétique
- les figures 16a et 16b sont des représentations schématiques d'un cinquième exemple non couvert par la présente invention, en particulier, ces deux figures représentent un mode de couplage de l'aimant avec la culasse ferromagnétique, ledit aimant étant disposé dans l'entrefer de ladite culasse.

### EXPOSÉ DÉTAILLÉ DE MODES DE RÉALISATION PARTICULIERS

L'invention décrite de manière détaillée ci-dessous met en oeuvre un convertisseur d'énergie électromagnétique qui comprend au moins un circuit magnétique susceptible d'induire une variation du flux magnétique traversant une bobine conductrice.

A cet égard, le circuit magnétique comprend une culasse agencée pour pivoter autour d'un axe de rotation entre une première P1 et une seconde P2 positions d'équilibre stabilisées, respectivement, par un premier aimant et un second aimant fixes.

Selon la présente invention, les deux aimants sont agencés de sorte que la stabilisation de la culasse selon l'une ou l'autre des première P1 et seconde P2 positions d'équilibre permette la circulation d'un flux magnétique dans la bobine conductrice, respectivement, selon un premier sens et un second sens opposé au premier sens.

Ainsi selon cet agencement, le passage de l'une des première P1 ou seconde position P2 d'équilibre à l'autre position d'équilibre, par exemple en exerçant une force sur la culasse, s'accompagne d'une variation temporelle du flux magnétique traversant la bobine conductrice et donc de l'apparition d'une tension aux bornes de ladite bobine conductrice.

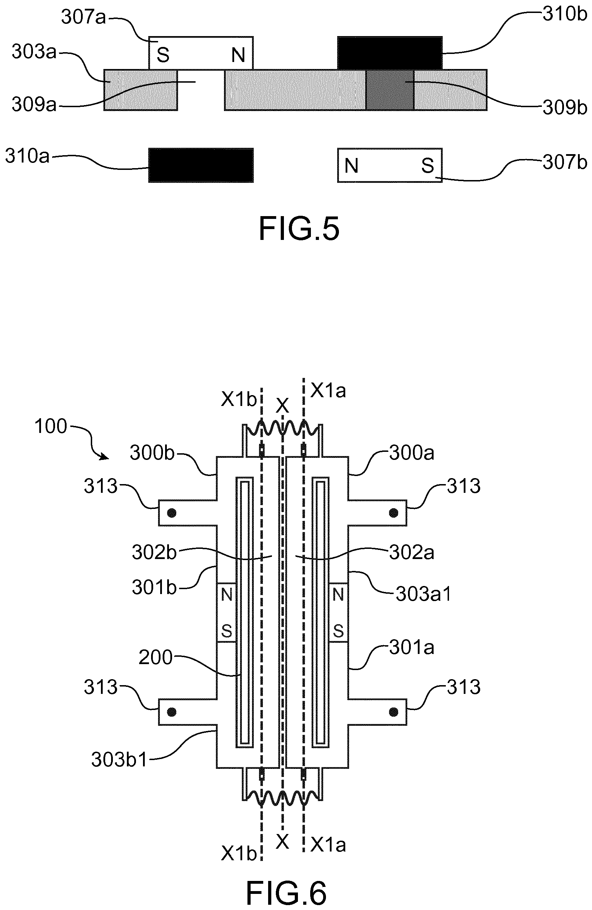

Sur les figures 2, 3a, 3b, 3c, 4a, 4b, 4c, on peut voir un convertisseur d'énergie électromagnétique 100 selon un premier exemple non couvert par la présente invention. Un mode de réalisation de la présente invention est représenté sur la figure 5.

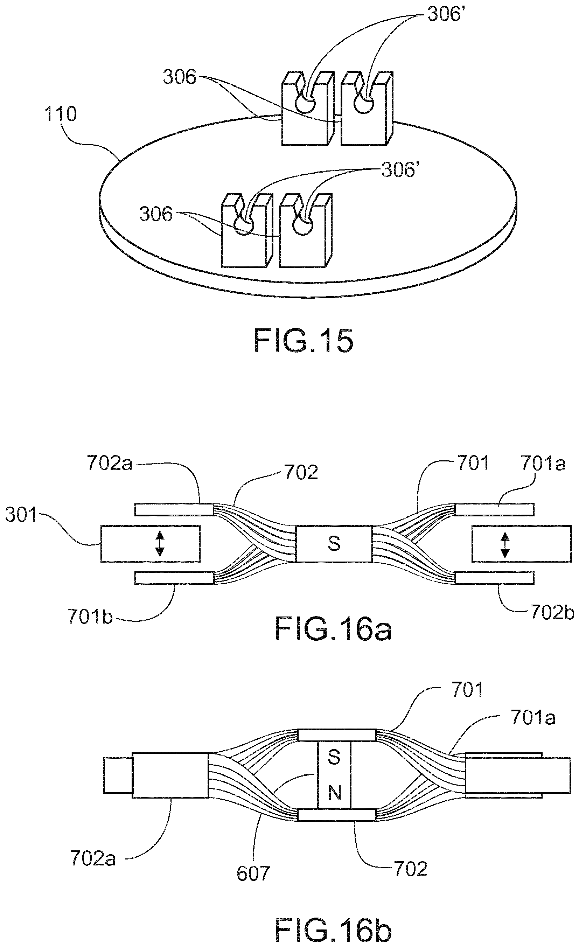

Le convertisseur d'énergie électromagnétique 100 comprend un support 110, par exemple une plaque de forme rectangulaire ou circulaire et faite d'une matière plastique (figure 15).

Par ailleurs, il est entendu que, tout au long de la description, dès lors qu'un élément ou un axe du convertisseur 100 sont considérés comme fixes, ils sont maintenus au support 110 par une liaison fixe (ou encastrement). En d'autres termes, la mention du support 110 pourra être omise dès lors qu'un élément ou axe du convertisseur 100 est considéré comme fixe.

Le convertisseur d'énergie électromagnétique 100 comprend une bobine conductrice 200 qui s'étend selon un axe d'élongation XX' et comprend deux extrémités dites, respectivement, première extrémité 201 et seconde extrémité 202 (figure 2).

La bobine conductrice 200 est faite d'un enroulement d'un fil conducteur, par exemple un fil en cuivre, selon l'axe d'élongation XX'. La bobine conductrice 200 comprend par ailleurs un volume interne V ouvert selon les deux extrémités de ladite bobine. Il est entendu sans qu'il soit nécessaire de le préciser que le fil conducteur comprend deux extrémités qui sont, dans toute la suite de la présente description nommées bornes de la bobine conductrice 200.

La bobine conductrice peut être fixe par rapport au support 110.

Le convertisseur d'énergie électromagnétique 100 comprend en outre au moins un dispositif de variation de flux magnétique 300.

Le dispositif de variation de flux magnétique 300 comprend une culasse 301.

Par culasse, on entend un élément, monobloc, adapté pour guider des lignes de champ créées par un aimant auquel ladite culasse est magnétiquement couplée. En particulier, au sens de la présente invention, la culasse, dès lors qu'elle est couplée magnétiquement avec un aimant, forme avec ledit aimant un circuit magnétique fermé.

La culasse peut comprendre au moins un matériau ferromagnétique choisi parmi : fer, alliage de fer et de silicium, alliage de fer et de Nickel, alliage de fer et de Cobalt.

La culasse 301 comprend une tronçon principal 302 traversant la bobine conductrice 200. En d'autres termes, le fil conducteur formant la bobine conductrice est enroulé autour du tronçon principal 302. Par ailleurs, le tronçon principal 302 comprend deux extrémités dites, respectivement, première extrémité principale et seconde extrémité principale.

La culasse 301 peut être stratifiée, autrement dit la culasse peut être formée par empilement d'éléments ferromagnétiques.

Le tronçon principal 302 peut être droit, et parallèle à l'axe d'élongation XX'.

La culasse 301 comprend également une portion secondaire 303 déportée de la bobine conductrice 200.

Par « déportée » de la bobine conductrice 200, on entend ne traversant pas ladite bobine.

Il est entendu, sans qu'il soit nécessaire de le préciser, que la portion secondaire 303 relie les deux extrémités du tronçon principal 302.

La portion secondaire 303 peut comprendre un tronçon secondaire 303a et deux tronçons latéraux 303b et 303c, les deux tronçons latéraux, 303b et 303c, reliant le tronçon secondaire 303a au tronçon principal 302.

La culasse 301 forme un cadre, avantageusement un cadre rectangulaire, formé par le tronçon principal 302, les deux tronçons latéraux 303b et 303c, ainsi que le tronçon secondaire 303a.

Par ailleurs, selon cet exemple, l'aire de section transversale du tronçon principal 302 peut avantageusement être identique à l'aire de la section transversale de la portion secondaire 303.

Au sens de la présente invention, on entend par « section transversale », la coupe résultant de l'intersection d'un plan perpendiculaire à l'axe d'élongation d'un élément.

En outre, la culasse 301 est agencée pour pivoter autour d'un axe de rotation X1-X1' entre deux positions d'équilibre stable, dites première position P1 d'équilibre et seconde position P2 d'équilibre. L'axe de rotation X1-X1' est fixe (par rapport au support 110).

De manière avantageuse, l'axe de rotation X1-X1' traverse la bobine conductrice 200.

Le passage de la culasse 301 de sa première position P1 d'équilibre vers sa seconde P2 position d'équilibre est nommée « cycle direct ».

Le passage de la culasse 301 de sa seconde position P2 d'équilibre vers sa première position P1 d'équilibre est nommée « cycle indirect ».

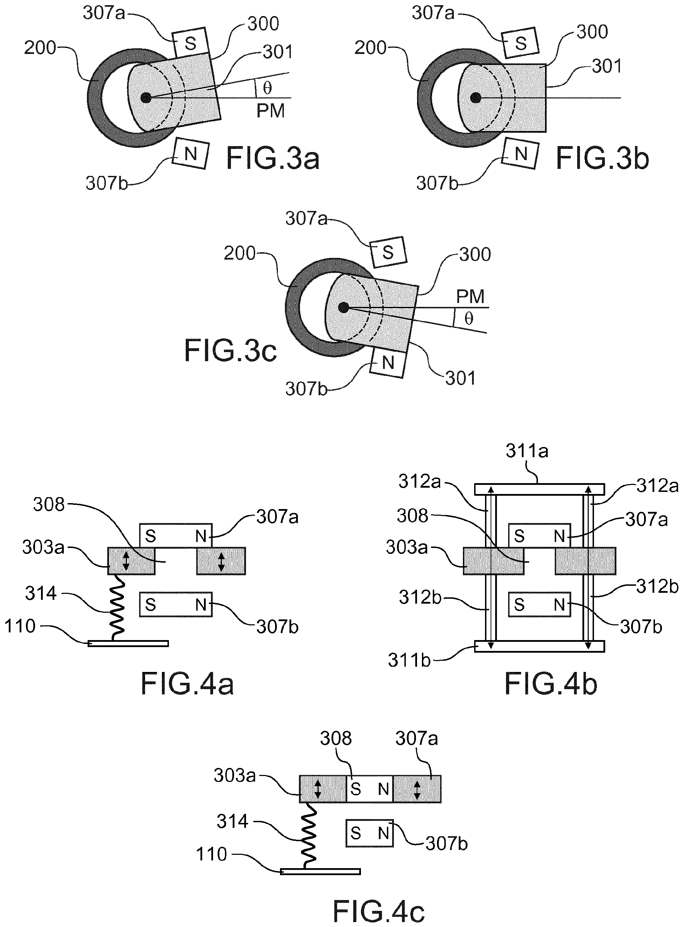

L'amplitude de rotation de la culasse 301 autour de l'axe de rotation X1-X1' est définie par un débattement angulaire θ par rapport à un plan médian PM (il est entendu sans qu'il soit nécessaire de le préciser que le plan médian PM comprend l'axe de rotation X1-X1'). Le plan médian PM, en terme de débattement angulaire θ de la culasse 301, est à mi-chemin entre les première P1 et seconde P2 positions (figure 3b).

En particulier, le plan médian PM peut avantageusement être parallèle à un plan moyen formé par le support 110.

Par « agencée pour pivoter autour d'un axe de rotation X1-X1' », on entend que la culasse 301 est mécaniquement liée au support 110 par une liaison pivot 304.

En particulier, la liaison pivot entre la culasse 301 et le support 110 peut être mise œuvre par des moyens pivot 304.

Par exemple, les moyens pivots 304 peuvent comprendre deux arbres 305 disposés sur la culasse 301, colinéaires avec l'axe de rotation X1-X1', et s'étendant dans deux sens opposés à partir de la surface latérale externe de ladite culasse 301. En particulier, chaque arbre 305 peut être disposé sur un des deux tronçon latéraux 303b et 303c (figure 2).

Les moyens pivots 304 peuvent également comprendre deux montants 306 disposés sur le support 110, et pourvus chacun d'un trou d'alésage 306' (figure 15) destiné à coopérer, chacun, avec un des arbres 305 disposé sur la culasse 301 de manière à maintenir la liaison pivot entre la culasse 301 et le support 110. Il est entendu que, dès lors que les trous d'alésage 306' des deux montants 306 coopèrent chacun avec un arbre 305 de la culasse 301, lesdits trous d'alésage 306' sont sur l'axe de rotation X1X1'.

Le dispositif de variation de flux magnétique 300 comprend également deux aimants fixes, dits, respectivement, premier aimant 307a et second aimant 307b.

En particulier, le premier aimant 307a et le second aimant 307b présentent, respectivement, une première polarité magnétique et une seconde polarité magnétique.

Par « polarité magnétique », on entend l'orientation des pôles de l'aimant.

En particulier, le premier aimant 307a est agencé de sorte que lorsque la culasse 301 est dans sa première position P1 d'équilibre, ladite culasse 301 est couplée magnétiquement au premier aimant 307a de manière à faire circuler un flux magnétique, ledit flux traversant la bobine conductrice 200 dans un premier sens S1 (figure 3a).

Par ailleurs le second aimant 307b est agencé de sorte que lorsque la culasse 301 est dans sa seconde position P2 d'équilibre, ladite culasse 301 est couplée magnétiquement au second aimant 307b de manière à faire circuler un flux magnétique, ledit flux traversant la bobine conductrice 200 dans un second sens S2 opposé au premier sens S1 (figure 3c).

Il est entendu que lorsque la culasse 301 est dans sa première position P1 d'équilibre stable, elle est stabilisée magnétiquement par le premier aimant 307a.

De manière équivalente, lorsque la culasse 301 est dans sa seconde position P2 d'équilibre stable, elle est stabilisée magnétiquement par le second aimant 307b

En particulier, le premier aimant 307a et le second aimant 307b sont agencés de sorte que le débattement angulaire θ, entre la seconde position P2 et la première position P1, est compris dans l'intervalle -45°, 45°.

En particulier, la première position P1 peut correspondre à un débattement angulaire θ de +5°, et la seconde position P2 peut correspondre à un débattement angulaire θ de -5°.

Par convention tout au long de la description, un angle θ positif correspond à un couplage de la culasse 301 avec le premier aimant, et un angle θ négatif correspond un couplage de la culasse 301 avec le second aimant.

Selon une première variante, la portion secondaire comprend un entrefer 308 au niveau duquel s'effectue le couplage magnétique avec le premier aimant 307a et le second aimant 307b dès lors que la culasse 301 se trouve, respectivement, dans sa première position P1 d'équilibre ou dans sa seconde position P2 d'équilibre.

Par exemple, l'entrefer 308 peut être disposé au niveau du tronçon secondaire 303a.

De manière avantageuse, dès lors que la culasse 301 est couplée magnétiquement à l'un ou l'autre des deux aimants 307a et 307b, ledit aimant est en appui contre la culasse 301 et chevauche l'entrefer 308 (figure 4a).

De manière alternative, dès lors que la culasse 301 est couplée magnétiquement à l'un ou l'autre des deux aimants 307a et 307b, ledit aimant est inséré dans l'entrefer 308 (figure 4c).

Il est donc entendu que, selon cette première variante de ce premier exemple, les deux aimants 307a et 307b sont en vis-à-vis au travers de l'entrefer 308.

De manière avantageuse, l'entrefer 308 est disposé au niveau du tronçon secondaire 303a. En particulier, le tronçon secondaire 303a est rectiligne et parallèle à l'axe d'élongation XX'.

De manière avantageuse, la première polarité et la seconde polarité magnétique sont parallèles à l'axe d'élongation XX', et en opposition l'une de l'autre.

Cette configuration permet une variation temporelle du flux magnétique traversant de la bobine conductrice la plus importante possible.

Selon l'invention, la portion secondaire comprend un premier entrefer 309a et un second entrefer 309b (figure 5) au niveau desquels s'effectue le couplage magnétique entre la culasse 301 et, respectivement, le premier aimant 307a et le second aimant 307b.

De manière avantageuse, le volume d'au moins un des deux entrefers 309a et 309b peut être comblé par un matériau amagnétique de manière à assurer la tenue mécanique de la culasse 301.

Le matériau amagnétique peut comprendre au moins un des éléments choisi parmi : Plastique, aluminium, étain, cuivre, colle.

Toujours selon l'invention, le convertisseur comprend en outre un premier élément 310a et un second élément 310b, fixes, faits d'un matériau ferromagnétique, et agencés pour court-circuiter, respectivement, le premier entrefer 309a et le second entrefer 309b dès lors que la culasse se trouve, respectivement, dans sa seconde position P2 d'équilibre ou dans sa première position P1 d'équilibre.

Par « court-circuiter un entrefer », on entend joindre les deux extrémités de l'entrefer de manière à assurer une continuité du circuit magnétique.

Le premier élément 310a et le second élément 310b sont par exemple des plaques faites d'un matériau ferromagnétique. Le matériau ferromagnétique peut comprendre au moins un des éléments choisi parmi : fer, alliage de fer et de silicium, alliage de fer et de Nickel, alliage de fer et de Cobalt, oxyde de fer.

Par exemple, lorsque le premier entrefer 309a est court-circuité par le premier élément 310a, ledit élément 310a est en appui contre la culasse 301 et chevauche le premier entrefer 309a.

De manière similaire, lorsque le second entrefer 309b est court-circuité par le second élément 310b, ledit élément 310b est en appui contre la culasse 301 et chevauche le second entrefer 309b (figure 5).

Il est entendu, sans qu'il soit nécessaire de le préciser, que le premier aimant 307a et le premier élément 310a sont en vis-à-vis au travers du premier entrefer 309a, et que le second aimant 307b et le second élément 310b sont en vis-à-vis au travers du second entrefer 309b.

De manière avantageuse, le premier entrefer 309a et le second entrefer 309b sont disposés au niveau du tronçon secondaire 303a. En particulier, le tronçon secondaire 303a est rectiligne et parallèle à l'axe d'élongation XX'.

De manière avantageuse, la première polarité et la seconde polarité magnétique sont parallèles à l'axe d'élongation XX', et en opposition l'une de l'autre.

Selon le premier exemple ou le mode de réalisation de l'invention, le convertisseur 100 peut également comprendre un premier court-circuit d'aimant 311a et un second court-circuit d'aimant 311b, nommés ci-après, respectivement, premier court-circuit 311a et second court-circuit 311b (figure 4b).

Le premier court-circuit 311a et le second court-circuit 311b sont solidaires de la culasse 301.

Par « solidaire de la culasse », on entend lié à la culasse par un lien fixe (ou un lien encastrement).

Le premier court-circuit 311a et le second court-circuit 311b sont destinés à court-circuiter les lignes de champ, respectivement, du premier aimant 307a et du second aimant 307b dès lors que la culasse 301 se trouve dans la seconde position P2 d'équilibre ou dans la première position P1 d'équilibre.

Par « court-circuiter les lignes de champ d'un aimant », on entend établir un chemin magnétique dans lequel les lignes de champ générées par un aimant sont guidées. En d'autres termes, les lignes de champ sont, au moins en partie, détournées de la culasse.

De manière avantageuse, le premier court-circuit 311a et le second court-circuit 311b comprennent chacun une plaque, faite d'un matériau ferromagnétique, et agencée pour connecter les deux pôles, respectivement, du premier aimant et du second aimant, dès lors que la culasse se trouve dans la seconde position P2 d'équilibre ou dans la première position P1 d'équilibre.

La premier court-circuit 311a et le second court-circuit 311b peuvent être liés fixement à la culasse 301, respectivement, par des premiers montants 312a et des seconds montants 312b (figure 4b).

Un tel convertisseur d'énergie électromagnétique 100 dès lors qu'il est au repos se trouve dans l'une ou l'autre des deux positions d'équilibre stabilisé par le premier aimant 307a ou le second aimant 307b. Il peut en particulier être stabilisé dans sa première position P1 d'équilibre par le premier aimant 307a, de sorte qu'un flux magnétique traverse la bobine conductrice selon le premier sens S1. Une force extérieure exercée sur la culasse 301, plus particulièrement au niveau de la portion secondaire 303, permet de provoquer la rotation de la culasse 301, autour de son axe de rotation X1X1', de la première position d'équilibre P1 vers la seconde position d'équilibre P2 (la culasse 301 effectue donc un cycle direct). Lors de cette rotation, il y a inversion du flux magnétique traversant la bobine conductrice, et par conséquent, apparition d'une tension électrique aux bornes de cette dernière.

Par ailleurs, la rotation est d'autant plus brutale que chacun des premier 307a et second 307b aimants exerce une force attractive sur la culasse 301. La disposition des premier 307a et second 307b aimants par rapport au ou aux entrefers confère donc au convertisseur d'énergie électromagnétique 100 un caractère bistable. Cet effet est particulièrement avantageux dès lors que la tension électrique générée aux bornes de la bobine conductrice est d'autant plus importante que cette rotation est rapide (tel que dicté par loi de Lentz). Il est ainsi possible selon cet agencement de générer un tension électrique appréciable aux bornes de la bobine conductrice 200.

Toujours selon ce premier exemple ou selon l'invention, le convertisseur 100 peut comprendre au moins une languette latérale 313 (figures 2 et 6). L'au moins une languette latérale 313 est agencée pour provoquer le passage de la culasse 301 de sa première position P1 d'équilibre vers sa seconde position P2 d'équilibre dès lors qu'une force extérieure est appliquée sur ladite languette.

En particulier, l'au moins une languette latérale 313 peut s'étendre selon une direction radiale à l'axe de rotation X1-X1' à partir du tronçon secondaire 303a.

De manière avantageuse, l'au moins un languette latérale 313 peut être adaptée pour fléchir sous l'action d'une force extérieure destinée à provoquer la rotation de la culasse 301 selon un cycle direct. En particulier, l'au moins une languette 313 peut une lame ressort.

Ainsi, l'au moins une languette latérale 313, lorsqu'elle est soumise à une force extérieure, fléchit dans une première phase et accumule une énergie mécanique. Dès lors que l'énergie mécanique accumulée par la languette augmente à un point tel que la position d'équilibre dans laquelle se trouve la culasse 301 n'est plus tenable, ladite culasse 301 pivote autour de son axe de rotation X1X1' pour adopter l'autre position d'équilibre.

Lors de cette rotation, la languette 313 libère une énergie qui a pour effet d'accélérer la rotation de la culasse 301, et par conséquent de permettre d'atteindre une tension électrique encore plus élevée aux bornes de la bobine conductrice.

Le convertisseur peut également être doté d'un moyen de rappel 314 (figures 4a et 4c) adapté pour contraindre la culasse 301 à adopter la première position P1 d'équilibre dès lors qu'aucune force extérieure n'est appliquée sur ladite culasse.

Le moyen de rappel 314 peut être par exemple un ressort.

Ce moyen de rappel 314 est particulièrement avantageux car il permet, lorsque le convertisseur d'énergie électromagnétique est activé, de doubler la variation temporelle de flux magnétique traversant la bobine conductrice.

En effet, dès qu'une action mécanique extérieure agit sur la culasse 301, ou sur la languette latérale 313, la culasse effectue un cycle direct. Ce cycle direct, après relâchement de l'action mécanique extérieure, est immédiatement suivi d'un cycle indirect par action du moyen de rappel 314 sur la culasse 301.

De manière particulièrement avantageuse, le convertisseur d'énergie électromagnétique peut comprendre des butées de fin de course destinées à prévenir la rotation de la culasse 301 au-delà de la première position P1 et de la seconde position P2.

Les aimants, éventuellement associés à des pièces ferromagnétiques, peuvent assurer ce rôle de buté ; ce qui assure, une fois en buté, une bonne conduction du flux magnétique (pas d'espace résiduel).

Les figures 6, 7a, 7b, 7c, 8a, 8b, et 8c illustrent un second exemple non couvert par la présente invention.

Selon ce second exemple au moins un dispositif de variation de flux magnétique comprend deux dispositifs de variation de flux magnétique décrits dans le premier mode de réalisation de la présente invention.

Les deux dispositifs de variation de flux magnétique sont dits, respectivement, premier dispositif de variation de flux magnétique 300a et second dispositif de variation de flux magnétique 300b.

Les culasses de chacun des premier dispositif de variation de flux magnétique 300a et second dispositif de variation de flux magnétique 300b sont dites, respectivement, première culasse 301a et seconde culasse 301b sont agencés pour pivoter de manière simultanée et symétrique, l'une de l'autre, par rapport à un plan passant par l'axe d'élongation XX', autour de leurs axes de rotation respectifs X1a-X1a' et X1b-X1b', dès lors qu'une force extérieure est exercée sur l'une ou l'autre des deux culasses.

Par « pivoter de manière simultanée et symétrique », on entend que les deux culasses présentent le même débattement angulaire θ à chaque instant.

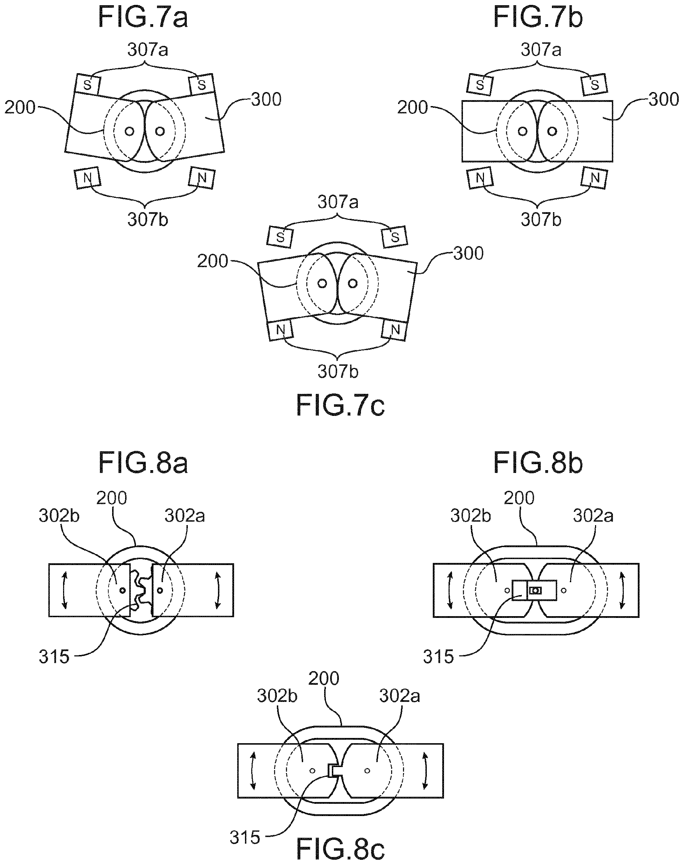

Il est également entendu sans qu'il soit nécessaire de le préciser que le premier aimant et le second aimant du premier dispositif 300a sont placés symétriquement, respectivement, au premier aimant et au second aimant du second dispositif 300b par rapport à un plan passant par l'axe d'élongation XX' (figures 7a à 7c).

En outre, il est également entendu, sans qu'il soit nécessaire de le préciser, que dès lors que la première culasse 301a est couplée au premier aimant du premier dispositif 300a, la seconde culasse 301b est couplée au premier aimant du second dispositif 300b (figure 7a).

Inversement, que dès lors que la première culasse 301a est couplée au second aimant du premier dispositif 300a, la seconde culasse 301b est couplée au second aimant du second dispositif 300b (figure 7c).

Parailleurs, les tronçons principaux des première culasse 301a et seconde culasse 301b dits, respectivement, premier tronçon principal 302a et second tronçon principal 302b, coopèrent entre eux, via des moyens de coopération 315, de manière à permettre audites culasses de pivoter de manière simultanée autour de leurs axes de rotation respectifs dès lors qu'une force extérieure est exercée sur l'une ou l'autre des deux culasses (figures 8a à 8c).

Les moyens des coopération 315 peuvent comprendre un engrenage formé sur chacun des premier 302a et second 302b tronçons principaux (figure 8a).

De manière alternative, les moyens de coopération 315 comprennent une rainure formée sur l'un des premier 302a ou second 302b tronçons principaux, et un profilé formé sur l'autre des premier 302a ou second 302b tronçons principaux, le profilé étant logé dans la rainure (figure 8c).

Par « profilé », on entend une structure en projection par rapport à une surface, et destinée à coopérer avec la rainure de manière à transmettre un effort mécanique d'une des deux culasse vers l'autre culasse.

Toujours de manière alternative, les moyens de coopération 315 peuvent être formés par deux glissières formées chacune sur le premier tronçon principal 302a et le second tronçon principal 302b (figure 8b).

De manière avantageuse, les axes de rotation de la première culasse 301a et de la seconde culasse 301b peuvent être confondus avec l'axe d'élongation XX'.

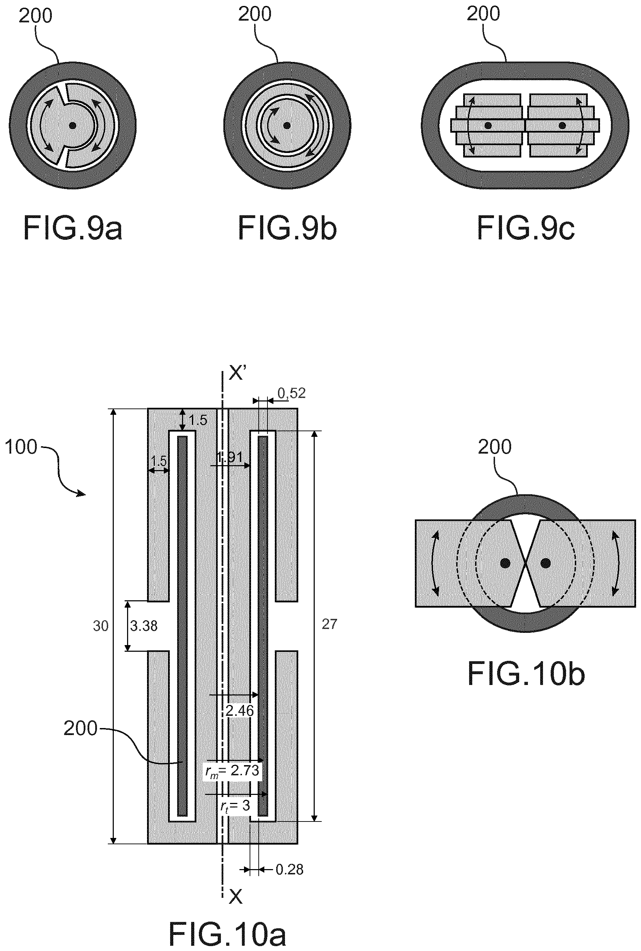

En particulier, le premier tronçon principal 302a et le second tronçon principal 302b peuvent former une liaison pivot entre la première culasse 301a et la seconde culasse 301b (figures 9a et 9b).

Selon ce second exemple, la somme des aires des sections transversales des premier 302a et second 302b tronçons principaux peut être égale à la somme des aires des sections transversales des premier 303a1 et second 303b1 tronçons secondaires.

Ainsi, selon cet agencement comprenant deux dispositifs de variation de flux magnétique, il est possible de doubler la variation temporelle de flux magnétique traversant la bobine conductrice en appliquant une force extérieure sur uniquement un des deux dispositifs.

Un convertisseur d'énergie électromagnétique ne comprenant qu'un seul de ces deux dispositifs de variation de flux magnétique, pour générer la même tension aux bornes de la bobine conductrice, devrait présenter une section transversale deux fois plus importante, et par conséquent un volume plus important.

Par ailleurs, le basculement rapide d'une position d'équilibre à l'autre d'une culasse 301a ou 301b peut conduire à des chocs angulaires intenses sur des butées de fin de course. Selon l'agencement proposé, les décélérations rapides de la première culasse et de la seconde culasse, lorsque que ces dernières heurtent des butées, sont opposées angulairement. Le support 110, qui est soumis à la somme des deux couples de décélération est alors soumis à un couple résiduel très modéré. La fixation au support 110 n'a alors pas besoin d'être aussi robuste qu'un convertisseur ne mettant en œuvre qu'un seul dispositif de variation de flux magnétique. Par ailleurs, toujours selon cet agencement comprenant deux dispositifs de variation de flux magnétique, les vibrations associées au mouvement de deux dispositifs sont réduites par rapport à un système qui n'en comprend qu'un seul.

De cet agencement avec deux dispositifs de variation de flux magnétique, il résulte également une réduction du moment d'inertie par comparaison à convertisseur d'énergie électromagnétique ne comprenant qu'un seul des deux dispositifs et susceptible de produire la même tension électrique aux bornes de la bobine conductrice. Cette réduction du moment d'inertie permet, pour un même couple, d'obtenir une accélération angulaire plus élevée et donc une variation de flux magnétique dans le bobinage plus rapide.

De par la symétrie de la structure, l'effort de mise en mouvement des deux culasses peut être apporté par l'une ou l'autre desdites culasses.

Le moyen de rappel 314 peut comprendre un ressort dont chacune des extrémités est attachée à une des deux culasses. Il est par ailleurs agencé pour contraindre chacune des deux culasse à adapter la première position d'équilibre (figure 6).

Les figures 10a et 10b représentent un convertisseur d'énergie électromagnétique 100 selon le second exemple non couvert par a présente invention.

Sur ces figures, les cotes sont exprimées en millimètres. Les champs magnétiques générés par les deux aimants sont de 0,8 T. La bobine conductrice est faite d'un enroulement de fil de cuivre comprenant N=436 spires, et présente une résistance électrique de 5,9 Ohm. Avec ce convertisseur, le passage de la première position à la seconde position s'effectue en 2 milliseconde.

Un tel dispositif permet de produire une énergie de 1 mJ.

La présente invention concerne également un interrupteur, par exemple un interrupteur autonome, comprenant le convertisseur d'énergie électromagnétique selon la présente invention.

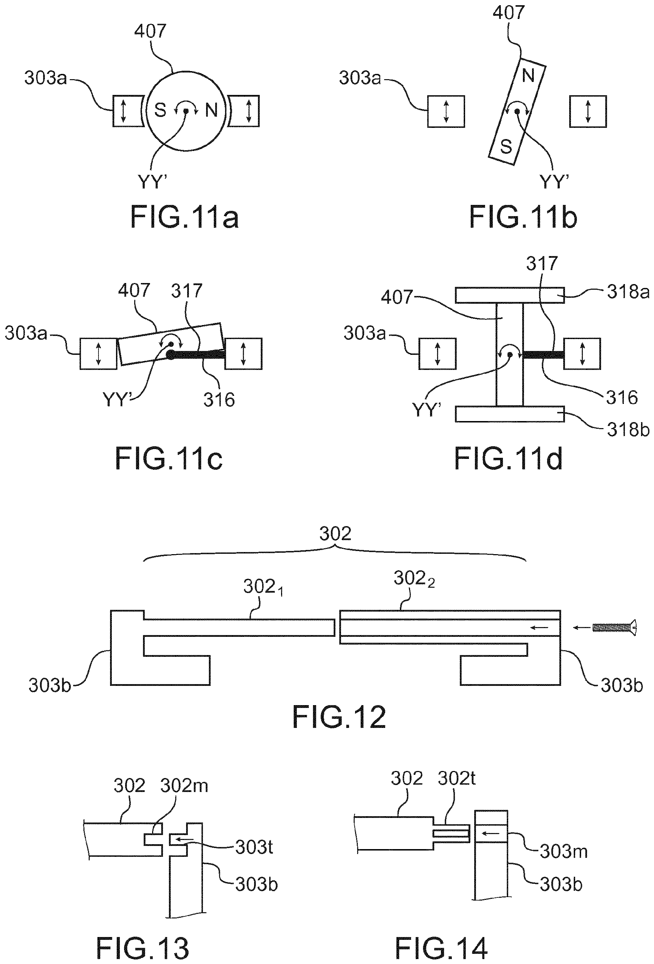

Les figures 11a à 11d illustrent un troisième exemple non couvert par la présente invention reprenant pour l'essentiel les éléments du premier exemple.

Ce troisième exemple diffère cependant du premier exemple en ce que le dispositif de variation de flux magnétique ne comprend qu'un seul aimant 407.

En particulier, la portion secondaire est pourvue de l'entrefer 308 dans lequel loge l'aimant 407.

L'aimant 407 est agencé pour pivoter autour d'un axe pivot YY' entre deux positions pivot dites, respectivement, première position pivot et seconde position pivot.

L'au moins un dispositif de variation de flux magnétique 300 comprend en outre un mécanisme d'entrainement 316 agencé pour contraindre l'aimant 407 à adopter la première position pivot ou la seconde position pivot dès lors que la culasse se trouve, respectivement, dans la première position P1 ou la seconde position P2.

Par ailleurs, la polarisation de l'aimant 407 est agencée de sorte que lorsque la culasse 301 est dans sa première position P1, le flux magnétique guidé par ladite culasse 301 traverse la bobine conductrice 200 dans un premier sens S1, et lorsque la culasse 301 est dans sa seconde position P2 d'équilibre, le flux magnétique guidé par ladite culasse 301 traverse la bobine conductrice 200 dans un second sens S2 opposé au premier sens S1.

Autrement dit, le passage d'une position d'équilibre à l'autre de la culasse 301 fait pivoter l'aimant 407, via a mécanisme d'entrainement 316, d'une position pivot à l'autre position pivot.

En particulier, lors d'un cycle direct, l'aimant 407 pivote de sa première position pivot vers sa seconde position pivot.

Inversement, lors d'un cycle indirect, l'aimant 407 pivote de sa seconde position pivot vers sa première position pivot.

Il est entendu, sans qu'il soit nécessaire de le préciser, que la rotation de l'aimant est induite par le mouvement ou la rotation de la culasse via le mécanisme d'entrainement 316.

Ainsi, dès lors que la culasse 301 effectue un cycle direct et/ou un cycle indirect, le flux magnétique traversant la bobine conductrice 200 varie de sorte qu'une tension électrique apparait à ses bornes.

Le mécanisme d'entrainement peut avantageusement comprendre une crémaillère fixe, est coopérant avec un engrenage solidaire de l'aimant.

En particulier, la crémaillère est fixée au support 110, et coopère avec l'engrenage fixé sur l'aimant. De manière avantageuse l'engrenage est centré par rapport à l'axe pivot YY'.

Cette configuration est particulièrement avantageuse puisqu'elle permet un retournement complet (de 180°) de l'aimant 407 si ce dernier présente une symétrie de révolution par rapport à l'axe pivot YY'.

De manière alternative, le mécanisme d'entrainement 316 peut comprendre une patte 317 maintenue fixement, selon une de ses extrémités, à la culasse au niveau de l'entrefer, et destinée à faire pivoter l'aimant d'une de ses positions pivot vers l'autre de ses positions pivot dès lors que la culasse pivote d'une de ses positions d'équilibre vers l'autre de ses positions d'équilibre (figures 11c et 11d).

La patte 317 comprend également une autre extrémité qui peut être liée à l'aimant 407 par une liaison pivot, ladite liaison pivot étant déportée de l'axe pivot YY'.

De manière particulièrement avantageuse, l'aimant 407 présente une symétrie de révolution autour de l'axe pivot YY'. L'entrefer 308 peut alors être de forme complémentaire à l'aimant 407. Selon cette configuration, l'aimant 407 est avantageusement maintenu par une liaison pivot dans l'entrefer 308.

L'aimant 407 peut également avoir une forme parallélépipédique. Selon cette configuration, l'axe pivot peut passer par le centre de l'aimant 407, et traverser de part en part, de manière perpendiculaire, deux faces opposées dudit aimant 407. De manière particulièrement avantageuse, l'axe pivot est également perpendiculaire à la polarisation magnétique de l'aimant 407.

L'aimant 407, dès lors qu'il a une forme parallélépipédique, peut comprendre deux extrémités en alignement avec la direction définie par ses pôles (parallèle à la polarisation magnétique de l'aimant), et au niveau desquels sont disposées une première 318a et une seconde 318b plaques ferromagnétiques et destinées à empêcher tout contact entre la culasse 301 et l'aimant 407. Cet agencement permet de limiter les chocs entre l'aimant 407 et la culasse 301 et par voie de conséquence réduire son usure.

Selon un quatrième exemple non couvert par la présente invention, l'au moins un dispositif de variation de flux magnétique 300 comprend deux dispositifs de variation de flux magnétique. Ce mode de réalisation reprend pour l'essentiel l'agencement décrit dans le second exemple mais met en œuvre deux dispositifs de variation de flux magnétique décrits dans le troisième exemple.

Les figures 16a et 16b illustrent un cinquième exemple non couvert par la présente invention reprenant pour l'essentiel les éléments du premier exemple.

Ce cinquième exemple diffère cependant du premier exemple en ce que le dispositif de variation de flux magnétique ne comprend qu'un seul aimant 607.

En particulier, la portion secondaire de la culasse est pourvue d'un entrefer 308 dans lequel loge l'aimant 607. L'entrefer 308 est formé par un volume délimité par deux terminaisons de la culasse dites, respectivement, première terminaison et seconde terminaison. En d'autres termes, l'aimant 607 est disposé entre le deux terminaisons de la culasse 301.

L'aimant 607 est fixe, et peut par exemple s'étendre, de sa première extrémité vers sa seconde extrémité, de manière radiale rapport à l'axe X1-X1' de rotation de la culasse. En particulier, l'aimant 607 peut se trouver dans le plan médian PM.

Les deux extrémités de l'aimant peuvent être en alignement avec la direction définie par ses pôles.

L'aimant 607 comprend également deux branches, faite d'un matériau ferromagnétique, dites, respectivement, première branche 701 et seconde branche 702, et disposées, respectivement, au niveau de la première extrémité et de la seconde extrémité. Chacune des deux branches comprend deux sous-branches.

Les deux sous branches d'une branche donnée sont agencées de sorte qu'une des sous branches contacte la culasse au niveau d'une de ses terminaisons dès lors que la culasse se trouve dans une de ses positions d'équilibre, tandis que l'autre sous branche contacte la culasse au niveau de l'autre terminaison dès lors que la culasse se trouve dans son autre position d'équilibre.

Le contact d'une sous branche, d'une branche donnée, au niveau d'une terminaison, connecte magnétiquement ladite terminaison avec l'extrémité de l'aimant sur laquelle est disposée ladite branche.

Plus particulièrement, les branches sont agencées de sorte que chacune des deux terminaisons de la culasse, dès lors que la culasse est dans une de ses deux positions d'équilibre, est en contact avec, respectivement, une sous branche de la première branche, et une sous branche de seconde branche.

Autrement dit, les sous-branches des deux branches sont ainsi agencées de sorte que dès que la culasse 301 se trouve dans une de ses positions d'équilibre, un contact magnétique entre la première extrémité de l'aimant avec une des deux terminaisons de la culasse 301, et un contact magnétique entre la seconde extrémité de l'aimant avec l'autre des deux terminaisons de la culasse 301 sont établis. Ainsi, dès lors que la culasse 301 se trouve dans une position d'équilibre, un flux magnétique imposé par l'aimant circule dans la culasse 301.

Les deux branches peuvent comprendre des feuilles ferromagnétiques en torsion.

En particulier, les deux sous-branches de la première branche, dites, respectivement, première sous branche 701a et seconde sous branche 701b, connectent respectivement, la première terminaison de la culasse 301 dès lors que ladite culasse 301 se trouve dans sa première position d'équilibre, et la seconde terminaison de la culasse 301 dès lors que ladite culasse 301 se trouve dans sa seconde position d'équilibre.

De manière équivalente, les deux sous-branches de la seconde branche, dites, respectivement, troisième sous branche 702a et quatrième sous branche 702b, connectent respectivement, la première terminaison de la culasse 301 dès lors que ladite culasse 301 se trouve dans sa première position d'équilibre, et la seconde terminaison de la culasse 301 dès lors que ladite culasse 301 se trouve dans sa seconde position d'équilibre.

Ainsi, un cycle direct ou un cycle indirect génère une variation de flux dans la bobine conductrice 200.

Selon un sixième exemple non couvert par a présente invention, l'au moins un dispositif de variation de flux magnétique 300 comprend deux dispositifs de variation de flux magnétique. Cet exemple reprend pour l'essentiel l'agencement décrit dans le second exemple mais met en œuvre deux dispositifs de variation de flux magnétique décrits dans le cinquième exemple.

La présente invention concerne également un interrupteur, par exemple un interrupteur autonome comprenant le convertisseur d'énergie électromagnétique selon la présente invention.

Chacune des au moins une languettes latérale peut être associée à un bouton et/ou une fonctionnalité particulière de l'interrupteur.

La mise en œuvre d'un convertisseur d'énergie électromagnétique selon l'un quelconque des exemples et du mode de réalisation de l'invention permet de réaliser des interrupteurs autonomes de petite taille et plus robuste par rapport aux interrupteurs connus de l'état de la technique.

Le convertisseur d'énergie électromagnétique peut également être mis en œuvre dans des commandes, des capteurs de fin de course, des détecteurs d'ouverture, et autres détecteurs autonomes actionnés mécaniquement.

Dans la plupart des cas, l'énergie récupérée servira en partie à transmettre une information radio à un récepteur sans-fil distant, information donnant par exemple l'état des interrupteurs/capteurs/détecteurs. Toutefois, d'autres applications sont envisageables, tel que par exemple le comptage d'événements, avec un enregistrement dans une mémoire et qui ne communique pas forcément à chaque pression mécanique

Quel que soit le mode de mise en œuvre considéré, la ou les culasses peut être démontable.

Selon un premier exemple illustré à la figure 12, la culasse 301 démontable comprend deux éléments susceptibles d'être liés ensemble par une vis. Selon cet exemple, le tronçon principal 302 est fait un arbre 302₁ et d'un tube 302₂ qui comprend un trou d'alésage destiné à coopérer avec l'arbre 302₁. En particulier, l'arbre 302₁ est lié fixement à un des tronçons latéraux 303b, tandis que le tube 302₂ est lié fixement à l'autre des tronçons latéraux 303c.

De manière alternative, tel qu'illustré à la figure 13, le tronçon principal 302 peut être monobloc, et comprendre en chacune de ces extrémités un mortaise 302m destinée à recevoir un tenon 303t disposé sur l'un ou l'autre des tronçons latéraux 303b, 303c. Le tronçon 302 peut former une pièce monobloc avec un des tronçons latéraux 303c positionné selon une des extrémités dudit tronçon 303b. L'autre extrémité du tronçon 300b peut être lié de façon non permanente à l'autre tronçon latéral 303b par la combinaison de la mortaise et du tenon.

Toujours de manière alternative, et tel qu'illustré à la figure 14, le tronçon principal 302 peut être monobloc, et comprendre en chacune de ces extrémités un tenon 302t destinée à être reçu par une mortaise 303m disposée sur l'un ou l'autre des tronçons latéraux 303b, 303c. Le tronçon 302 peut former une pièce monobloc avec un des tronçons latéraux 303c positionné selon une des extrémités dudit tronçon 303b. L'autre extrémité du tronçon 300b peut être lié de façon non permanente à l'autre tronçon latéral 303b par la combinaison de la mortaise et du tenon.

Les mortaises 302m et 303m peuvent être ronde, en croix, ou avoir toute autre forme susceptible de convenir à l'application visée.

Cet agencement permet alors d'enfiler une bobine conductrice formée à avant le montage de la ou des culasses.

Les culasses peuvent également être non-démontables. La bobine conductrice peut alors être formée en passant le fil conducteur par les entrefers au cours de l'enroulement des spires. Un support de bobinage, ensuite retirable ou dissoluble peut être nécessaire pour éviter une mise en contact des spires avec la ou les culasses lors de la réalisation des enroulements. En effet, ce contact pourrait restreindre voir bloquer la rotation de la culasse. Le bobinage peut être imprégné de colle afin qu'il conserve sa forme.

## Revendications

1. Convertisseur d'énergie électromagnétique comprenant :
- une bobine conductrice (200) s'étendant selon un axe d'élongation XX',
- au moins un dispositif de variation de flux magnétique (300) qui comprend une culasse (301) et deux aimants fixes dits, respectivement, premier aimant (307a) et second aimant (307b), la culasse (301) comprenant un tronçon principal (302) traversant la bobine conductrice (200), et une portion secondaire déportée de la bobine conductrice (200), la culasse (301) étant agencée pour se mouvoir entre deux positions d'équilibre stables dites, respectivement, première position P1 d'équilibre et seconde position P2 d'équilibre, les deux aimants étant agencés de sorte que lorsque la culasse (301) est dans sa première position P1 d'équilibre, ladite culasse (301) est couplée magnétiquement au premier aimant (307a) de manière à faire circuler un flux magnétique au travers de la bobine conductrice (200) dans un premier sens S1, et lorsque la culasse (301) est dans sa seconde position P2 d'équilibre, ladite culasse (301) est couplée magnétiquement au second aimant (307b) de manière à faire circuler un flux magnétique au travers de la bobine conductrice (200) dans un second sens S2 opposé au premier sens S1,
**caractérisé en ce que**
la culasse (301) est agencée pour pivoter autour d'un axe de rotation fixe, parallèle à l'axe d'élongation de la bobine conductrice (200),
la portion secondaire de la culasse (301) comprend un premier entrefer (309a) et un second entrefer (309b) au niveau desquels s'effectue le couplage magnétique, respectivement, du premier aimant (307a) et du second aimant (307b) avec ladite culasse (301) dès lors que cette dernière se trouve, respectivement, dans sa première position P1 d'équilibre ou dans sa seconde position P2 d'équilibre, le convertisseur comprenant en outre un premier élément (310a) et un second élément (310b), fixes, faits d'un matériau ferromagnétique, et agencés pour court-circuiter, respectivement, le premier entrefer (309a) et le second entrefer (309b) dès lors que la culasse (301) se trouve, respectivement, dans sa seconde position P2 d'équilibre ou dans sa première position P1 d'équilibre.

2. Convertisseur selon la revendication 1, dans lequel le premier aimant (307a) et le second aimant (307b) présentent, respectivement, une première polarité magnétique et une seconde polarité magnétique, la première et la seconde polarité magnétique étant parallèles et en opposition l'une de l'autre, avantageusement, la première polarité magnétique est parallèle à l'axe d'élongation XX'.

3. Convertisseur selon l'une des revendications 1 ou 2, dans lequel le convertisseur comprend en outre au moins une languette latérale (313) agencée pour provoquer le passage de la culasse (301) de sa première position P1 d'équilibre à sa seconde position d'équilibre dès lors qu'une force extérieure est appliquée sur ladite languette.

4. Convertisseur, selon la revendication 3, dans lequel la languette latérale (313) est adaptée pour fléchir sous l'action d'une force extérieure et accumuler une énergie mécanique avant que la culasse (301) ne passe de sa première position P1 d'équilibre à sa second position P2 d'équilibre, ladite énergie mécanique accumulée par la languette latérale (313) est libérée lors du passage de la culasse (301) de sa première position P1 d'équilibre à sa seconde position P2 d'équilibre.

5. Convertisseur selon l'une des revendication 1 à 4, dans lequel l'au moins un dispositif de variation de flux magnétique (300) comprend deux dispositifs de variation de flux magnétique dits, respectivement, premier dispositif de variation de flux magnétique (300a) et second dispositif de variation de flux magnétique (300b), les culasses (301) de chacun des premier dispositif de variation de flux magnétique (300a) et second dispositif de variation de flux magnétique (300b), dites respectivement, première culasse (301a) et seconde culasse (301b), sont agencées pour pivoter de manière simultanée et symétrique l'une de l'autre par rapport à un plan passant par l'axe d'élongation XX', autour de leurs axes de rotation respectifs, dès lors qu'une force extérieure est exercée sur l'une ou l'autre des deux culasses (301).

6. Convertisseur selon la revendication 5, dans lequel les tronçons principaux des première culasse (301a) et seconde culasse (301b) dits, respectivement, premier tronçon principal (302a) et second tronçon principal (302b), coopèrent entre eux, via des moyens de coopération (315), de manière à permettre auxdites culasses (301) de pivoter de manière simultanée autour de leur axe de rotation respectif dès lors qu'une force extérieure est exercée sur l'une ou l'autre des deux culasses (301).

7. Interrupteur autonome comprenant le convertisseur d'énergie électromagnétique selon l'une des revendications 1 à 6.

## Patentansprüche

1. Elektromagnetischer Energiewandler, enthaltend:
- eine leitende Spule (200), die entlang einer Erstreckungsachse XX' verläuft,
- zumindest eine Vorrichtung (300) zur Veränderung des magnetischen Flusses, die ein Joch (301) und zwei Festmagnete, erster Magnet (307a) und zweiter Magnet (307b) genannt, aufweist, wobei das Joch (301) einen Hauptabschnitt (302) aufweist, der durch die leitende Spule (200) verläuft, sowie einen zur leitenden Spule (200) versetzten Nebenabschnitt, wobei das Joch (301) dazu vorgesehen ist, sich zwischen zwei stabilen Gleichgewichtspositionen, erste Gleichgewichtsposition P1 und zweite Gleichgewichtsposition P2 genannt, zu bewegen, wobei die beiden Magnete so angeordnet sind, dass dann, wenn sich das Joch (301) in seiner ersten Gleichgewichtsposition P1 befindet, das Joch (301) magnetisch mit dem ersten Magneten (307a) gekoppelt ist, um zu bewirken, dass ein magnetischer Fluss durch die leitende Spule (200) in einer ersten Richtung S1 fließt, und dann, wenn sich das Joch (301) in seiner zweiten Gleichgewichtsposition P2 befindet, das Joch (301) magnetisch mit dem zweiten Magneten (307b) gekoppelt ist, um zu bewirken, dass ein magnetischer Fluss durch die leitende Spule (200) in einer zweiten Richtung S2 entgegengesetzt zur ersten Richtung S1 fließt, **dadurch gekennzeichnet, dass**
das Joch (301) dazu vorgesehen ist, sich um eine feste Drehachse zu verschwenken, die parallel zur Erstreckungsachse der leitenden Spule (200) verläuft,
der Nebenabschnitt des Jochs (301) einen ersten Luftspalt (309a) und einen zweiten Luftspalt (309b) aufweist, an denen die magnetische Kopplung des ersten Magneten (307a) bzw. des zweiten Magneten (307b) mit dem Joch (301) erfolgt, sobald sich letzteres in seiner ersten Gleichgewichtsposition P1 bzw. in seiner zweiten Gleichgewichtsposition P2 befindet, wobei der Wandler ferner ein erstes Element (310a) und ein zweites Element (310b) enthält, die feststehend sind, aus einem ferromagnetischen Material hergestellt sind und dazu vorgesehen sind, den ersten Luftspalt (309a) bzw. den zweiten Luftspalt (309b) kurzuzuschließen, sobald sich das Joch (301) in seiner zweiten Gleichgewichtsposition P2 bzw. in seiner ersten Gleichgewichtsposition P1 befindet.

2. Wandler nach Anspruch 1,
wobei der erste Magnet (307a) und der zweite Magnet (307b) eine erste magnetische Polarität bzw. eine zweite magnetische Polarität haben, wobei die erste und die zweite magnetische Polarität parallel und entgegengesetzt zueinander sind, wobei vorteilhafterweise die erste magnetische Polarität parallel zur Erstreckungsachse XX' verläuft.

3. Wandler nach einem der Ansprüche 1 oder 2,
wobei der Wandler ferner zumindest eine seitliche Lasche (313) aufweist, die dazu vorgesehen ist, den Übergang des Jochs (301) von seiner ersten Gleichgewichtsposition P1 in seine zweite Gleichgewichtsposition P2 zu bewirken, sobald eine äußere Kraft auf die Lasche ausgeübt wird.

4. Wandler nach Anspruch 3,
wobei die seitliche Lasche (313) dazu ausgelegt ist, sich unter der Wirkung einer äußeren Kraft zu biegen und eine mechanische Energie zu speichern, bevor das Joch (301) von seiner ersten Gleichgewichtsposition P1 in seine zweite Gleichgewichtsposition P2 übergeht, wobei die von der seitlichen Lasche (313) gespeicherte mechanische Energie beim Übergang des Jochs (301) von seiner ersten Gleichgewichtsposition P1 in seine zweite Gleichgewichtsposition P2 freigesetzt wird.

5. Wandler nach einem der Ansprüche 1 bis 4,
wobei die zumindest eine Vorrichtung (300) zur Veränderung des magnetischen Flusses zwei Vorrichtungen zur Veränderung des magnetischen Flusses, erste Vorrichtung (300a) zur Veränderung des magnetischen Flusses bzw. zweite Vorrichtung (300b) zur Veränderung des magnetischen Flusses genannt, aufweist, wobei die Joche (301) jeweils der ersten Vorrichtung (300a) zur Veränderung des magnetischen Flusses und der zweiten Vorrichtung (300b) zur Veränderung des magnetischen Flusses, erstes Joch (301a) bzw. zweites Joch (301b) genannt, dazu vorgesehen sind, sich gleichzeitig und in Bezug auf eine durch die Erstreckungsachse XX' verlaufende Ebene symmetrisch zueinander um ihre jeweiligen Drehachsen zu verschwenken, sobald eine äußere Kraft auf das eine oder das andere der beiden Joche (301) ausgeübt wird.

6. Wandler nach Anspruch 5,
wobei die Hauptabschnitte des ersten Jochs (301a) und des zweiten Jochs (301b), erster Hauptabschnitt (302a) bzw. zweiter Hauptabschnitt (302b) genannt, über Kooperationsmittel (315) miteinander zusammenwirken, so dass die Joche (301) sich gleichzeitig um ihre jeweilige Drehachse verschwenken können, sobald eine äußere Kraft auf das eine oder das andere der beiden Joche (301) ausgeübt wird.

7. Eigenständiger Schalter, enthaltend einen elektromagnetischen Energiewandler nach einem der Ansprüche 1 bis 6.

## Claims

1. Electromagnetic energy converter comprising:
- a conductive coil (200) extending along an elongation axis XX',
- at least one magnetic flux variation device (300) which comprises a yoke (301) and two fixed magnets called, respectively, first magnet (307a) and second magnet (307b), the yoke (301) comprising a main section (302) passing through the conductive coil (200), and a secondary portion offset from the conductive coil (200), the yoke (301) being laid out to move between two stable equilibrium positions called, respectively, first equilibrium position P1 and second equilibrium position P2, the two magnets being laid out such that when the yoke (301) is in its first equilibrium position P1, said yoke (301) is magnetically coupled to the first magnet (307a) so as to make a magnetic flux circulate through the conductive coil (200) in a first direction S1, and when the yoke (301) is in its second equilibrium position P2, said yoke (301) is magnetically coupled to the second magnet (307b) so as to make a magnetic flux circulate through the conductive coil (200) in a second direction S2 opposite to the first direction S1, **characterized in that**:
the yoke (301) being laid out pivot around a fixed axis of rotation, parallel to the elongation axis XX',
in which the secondary portion of the yoke (301) comprises a first air gap (309a) and a second air gap (309b) at the level of which takes place the magnetic coupling, respectively, of the first magnet (307a) and of the second magnet (307b) with said yoke (301) as soon as the latter finds itself, respectively, in its first equilibrium position P1 or in its second equilibrium position P2, the converter further comprising a first element (310a) and a second element (310b), fixed, made of a ferromagnetic material, and laid out to short-circuit, respectively, the first air gap (309a) and the second air gap (309b) as soon as the yoke (301) finds itself, respectively, in its second equilibrium position P2 or in its first equilibrium position P1.

2. Converter according to claim 1, in which the first magnet (307a) and the second magnet (307b) have, respectively, a first magnetic polarity and a second magnetic polarity, the first and the second magnetic polarity being parallel and in opposition one from the other, advantageously, the first magnetic polarity is parallel to the elongation axis XX'.

3. Converter according to any of the claims 1 or 2, wherein the converter further comprises at least one side tongue (313) laid out to cause the passage of the yoke (301) from its first equilibrium position P1 to its second equilibrium position as soon as an external force is applied to said tongue.

4. Converter, according to claim 3, in which the side tongue (313) is adapted to bend under the action of an external force and to accumulate a mechanical energy before the yoke (301) passes from its first equilibrium position P1 to its second equilibrium position P2, said mechanical energy accumulated by the side tongue (313) is released during the passage of the yoke (301) from its first equilibrium position P1 to its second P2 equilibrium position.

5. Converter according to any of the claims 1 to 4, wherein the at least one magnetic flux variation device (300) comprises two magnetic flux variation devices called, respectively, first magnetic flux variation device (300a) and second magnetic flux variation device (300b), the yokes of each of the first magnetic flux variation device and second magnetic flux variation device called, respectively, first yoke (301a) and second yoke (301b), are laid out to pivot in a simultaneous and symmetrical manner, one from the other, with respect to a plane passing through the elongation axis XX', around their respective axes of rotation, as soon as an external force is exerted on one or the other of the two yokes (301).

6. Converter according to claim 5, in which the main sections of the first yoke and second yoke called, respectively, first main section (302a) and second main section (302b), cooperate with each other, via cooperation means (315), so as to enable said yokes to pivot in a simultaneous manner around their respective axes of rotation as soon as an external force is exerted on one or the other of the two yokes (301).

7. Autonomous switch comprising the electromagnetic energy converter according to any of the claims 1 to 6.
